(19)

Europäisches
Patentamt
European
Patent Office
Office européen
des brevets

(11)  **EP 1 864 161 B1**

(12)  **EUROPEAN PATENT SPECIFICATION**

(45) Date of publication and mention
of the grant of the patent:
**14.01.2015 Bulletin 2015/03**

(21) Application number: **06725490.4**

(22) Date of filing: **31.03.2006**

(51) Int Cl.:
**G02B 26/02** *(2006.01)*     **G02B 3/14** *(2006.01)*
**G02B 27/00** *(2006.01)*     **G02B 26/00** *(2006.01)*

(86) International application number:
**PCT/EP2006/061244**

(87) International publication number:
**WO 2006/103290 (05.10.2006 Gazette 2006/40)**

(54) **IMAGE-FORMING OPTICAL SYSTEM WITH OPTICAL POWER CONTROL**

BILDGEBENDES OPTISCHES SYSTEM MIT REGELUNG DER OPTISCHEN LEISTUNG

SYSTEME OPTIQUE DE FORMATION D'IMAGE A COMMANDE DE PUISSANCE OPTIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **31.03.2005 FR 0550834**

(43) Date of publication of application:
**12.12.2007 Bulletin 2007/50**

(73) Proprietor: **Parrot**
**75010 Paris (FR)**

(72) Inventors:
• **CRAEN, Pierre**
**F-4053 Embourg (BE)**

• **BERGE, Bruno**
**F-69002 Lyon (FR)**

(74) Representative: **Brochard, Pascale et al**
**Osha Liang**
**32 avenue de l'Opéra**
**75002 Paris (FR)**

(56) References cited:
**WO-A-2004/077125     WO-A1-2004/099830
DE-A1- 19 710 668     FR-A- 1 602 997
US-A1- 2004 227 838**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the invention

The invention relates to an image-forming optical system whose power can be modified. Such an optical system is generally associated with a device of the digital or silver-based camera or video camera type, but also with a microscope or endoscope.

Presentation of the prior art

In general, optical systems whose power can be modified comprise several groups of rigid lenses of fixed focal length, the positions and/or relative distances of which may be modified.

Document FR 2580412 describes a device that simultaneously magnifies and focuses by means of the displacement of one or more lens groups. This displacement is the combination of simultaneous movements of the various lens groups. These movements are very complex and correspond to predetermined movement laws.

The displacements of the lens groups require the production of systems having a large number of mechanical linkages so as to obtain the various displacements. Consequently, such systems are relatively large and fragile.

US Patent 6 369 954 in the name of the Applicant describes exemplary embodiments of a variable-focus liquid lens of the electrowetting type which includes a movable refractive interface separating two liquids of different refractive indices contained in a chamber having at least two transparent opposed faces. The curvature of the refractive interface, and therefore the power of the liquid lens, may be modified by applying a voltage between one of the two liquids defining the movable refractive interface and an electrode provided near the other liquid in the chamber.

The power of such a system made up of a liquid lens or several liquid lenses may be modified without the need for mechanical displacements of the liquid lenses, making it possible to obtain an optical system that is less complex and less bulky.

In general, the image of an object obtained by an ideal optical system is such that one point in the object corresponds to one point in the image and that an object plane perpendicular to the optical axis of the optical system corresponds to one plane in the image. Furthermore, an optical system must render the colours faithfully. If the light is monochromatic and only the light rays close to the optical axis reach the optical system, it is possible to obtain almost ideal optical performance. However, in practice, actual optical systems have generally a large aperture so that light rays away from the optical axis reach the image acquisition means. Furthermore, optical systems are generally intended to receive white light, for example sunlight, which is not monochromatic. It is therefore very difficult to obtain an optical system operating ideally. The expression "optical aberration" is used to describe the differences existing between an ideal image and the actual image obtained. To obtain an optical system of high performance, it is therefore desirable to reduce the optical aberrations to a minimum in order to obtain an image as close as possible to an ideal image.

One optical aberration corresponds to chromatic aberration, which derives from the fact that when white light passes through a prism it is split into a spectrum with the colours of the rainbow. There are two types of chromatic aberration, namely, axial (or longitudinal) chromatic aberration when the position of the focus on the optical axis varies with wavelength, and length (or lateral) chromatism when the size of the image in the peripheral regions varies with wavelength. In a conventional optical system consisting of rigid lenses, chromatic aberration is corrected using many lenses made from various types of optical glass having different refraction and dispersion properties.

Another example of optical aberration is field curvature aberration, which is an aberration that does not depend, to a first order, on the wavelength. This is because, in optical systems consisting of conventional rigid lenses, the image of an object plane appears curved and not flat. Since the image acquisition means provided by the optical system, for example a film, is flat, if the centre of the image is sharp, the edges of the image will appear blurred, and in contrast, if the edges of the image are sharp, the centre of the image will appear blurred. One solution for correcting field curvature aberration consists in using rigid lenses of particular shapes, or a combination of rigid lenses having specific powers and refractive indices.

For an optical system consisting of rigid lenses, the optical aberrations vary little during operation of the optical system. This is because the angles of incidence of the light rays with respect to the various rigid lenses of the optical system vary little during displacement of the lenses. Consequently, once the optical aberrations have been initially corrected, for example for given positions of the rigid lenses, they remain corrected or practically corrected for a large range of positions of the lenses during operation of the optical system.

A different situation arises in the case of an optical system comprising at least one variable-focus liquid lens. This is because the power is modified by varying the radius of curvature of the movable refractive interface of the liquid lens. This therefore entails large variations in the angles of incidence of the light rays relative to the movable refractive interface during operation of the optical system. As a result, there is a permanent and possibly large variation in the optical aberrations during operation of the optical system.

Documents WO 2004/077125 and US 2004/227838 disclose optical systems comprising two electrowetting liquid lenses.

Summary of the invention

The object of the invention is to provide an optical system according to claim 1, comprising liquid lenses, allowing the power of the optical system to be modified and, at the same time, at least one optical aberration to be automatically corrected. Another object of the present invention is to provide an optical system of relatively simple design. Another object of the present invention is an optical system compatible with an automatic focusing or autofocus system.

Another object of the present invention is to provide a method according to claim 11 of controlling an optical system comprising liquid lenses for modifying the power of the optical system and simultaneously correcting at least one optical aberration.

In order for the power of an optical system to be modified and an optical aberration to be corrected at the same time, the inventors propose the use of an optical system according to the invention consisting of two variable-focus electrowetting lenses. For each value of the power of the optical system, a particular power pair for the variable-focus lenses is determined for which the optical aberration in question is eliminated or minimized.

More particularly, the present invention provides an image-forming optical system, comprising at least first and second variable-focus lenses of the electrowetting type, the focal length of each lens being controlled by the application of a control voltage; and a control device suitable for receiving a control signal representative of a desired power of the optical system and suitable for delivering, on the basis of the control signal and of a predefined control law and/or of a predefined table, at least a first control voltage to the first lens and a second control voltage to the second lens so that the power of the optical system obtained is equal to the desired power while simultaneously correcting, at least in part, one or more optical aberrations.

According to one embodiment of the invention, the system comprises at least a third variable-focus lens of the electrowetting type, the control device furthermore being suitable for delivering, on the basis of the control signal received and of said predefined control law and/or of said predefined table, a third control voltage to the third lens so that the power of the optical system obtained is equal to the desired power while simultaneously correcting two optical aberrations, or while obtaining a given magnification of the image and simultaneously correcting one optical aberration.

According to one embodiment of the invention, the optical aberration is a chromatic aberration or the field curvature aberration.

According to one embodiment of the invention, the system further includes a means for analysing at least one part of the image and for delivering to the control device said control signal with a value for making it possible to focus on the basis of the analysis of said image.

According to one embodiment of the invention, the method comprises the prior step consisting in analysing at least part of the image formed and in determining a value of said control signal for optimizing a quality criterion of the image to ensure focusing.

According to one embodiment of the invention, the method comprises the prior steps consisting in applying given first and second control voltages to the first and second lenses respectively, in order to obtain an image with a given optical aberration and in determining a value of said control signal on the basis of an analysis of at least part of the image obtained with said given optical aberration making it possible to focus.

According to one embodiment of the invention, the given optical aberration is a chromatic aberration. The analysis of the image consists in comparing, for at least one given wavelength or at least one given wavelength band, the value of a function, which reaches an extreme value or a peak value when the optical system is focused, in the presence of said chromatic aberration and the expected value of the function for said wavelength or wavelength bands in the absence of said chromatic aberration.

According to one embodiment of the invention, the function representative of focusing is the transfer modulation function of the optical system.

Brief description of the drawings

These objects, features and advantages, and also others of the present invention will be explained in detail in the following description of the particular nonlimiting illustrative examples given in relation to the appended figures in which:

- Figure 1 shows a first illustrative example of an optical system according to the present invention;
- Figure 2 illustrates an example of how the power of the optical system varies with the power of an optical element of the optical system for correcting a chromatic aberration;
- Figure 3 illustrates an example of how the power of the optical system varies with the power of an optical element of the optical system for correcting the field curvature;

- Figure 4 shows a second illustrative example of an optical system according to the present invention; and
- Figure 5 illustrates the principle of how the optical system according to the above illustrative examples is controlled for autofocusing.

Detailed description

For the sake of clarity, identical elements are denoted by the same references in the various figures. In the rest of the description, a variable-focus lens of the electrowetting type denotes an optical system that includes a liquid diffractive interface separating two liquid media, the radius of curvature of which may be modified by electrowetting. Consequently, an optical system comprising, in one and the same enclosure, two liquid diffractive interfaces, the radius of curvature of each liquid diffractive interface being able to be modified by electrowetting, corresponds, according to the present invention to an optical system based on two variable-focus lenses of the electrowetting type.

The invention relates to an optical system for modifying the power of the optical system while simultaneously correcting an optical aberration.

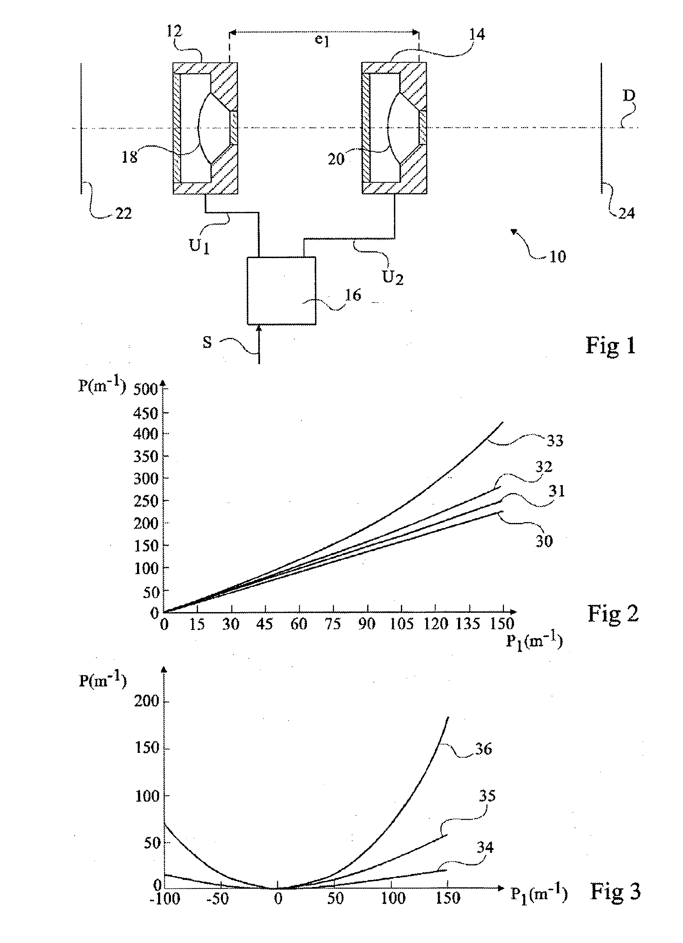

Figure 1 shows a first illustrative example of an optical system 10 according to the invention. In Figure 1, the axis D corresponds to the optical axis of the optical system 10. In the present example, the optical system 10 comprises two variable-focus liquid lenses 12, 14 supplied via outputs of an electrical control device 16. Each variable-focus liquid lens 12, 14 has a movable refractive interface 18, 20 that separates two liquids of different refractive indices, the shape of the interface being electrically controlled. More precisely, by applying voltages $U_1$, $U_2$ between the liquids defining the movable refractive interfaces 18, 20 it is possible to modify the curvatures of the refractive interfaces and therefore the focal lengths of the lenses 12, 14. To give an example, each liquid lens 12, 14 may correspond to one of the exemplary embodiments described in US Patent 6 369 954. The control device 16 receives a signal S representative of the desired total power P of the optical system and delivers the voltages $U_1$, $U_2$ to the two variable-focus liquid lenses 12, 14 so as to obtain the desired total power P, making it possible for example to focus the image, obtained from an object lying in an object plane 22, in an image plane 24 and to correct an optical aberration.

The Applicant has demonstrated that, with a structure as shown in Figure 1 comprising two variable-focus lenses 12, 14 it is possible to vary the power P of the optical system 10 and simultaneously correct an optical aberration, for example a chromatic aberration or the field curvature aberration by specifically controlling the curvature of the movable refractive interface 18 of the variable-focus lens 12 and the curvature of the movable refractive interface 20 of the variable-focus lens 14 according to predetermined control laws.

These control laws may be determined analytically or experimentally. The control device 16 may comprise computing means for determining, for each level of power P of the optical system 10 desired, a pair of control voltages $U_1$, and $U_2$ corresponding to convergences of the lenses 12 and 14 for obtaining the desired power P, while at the same time correcting an optical aberration. The control device 16 may also include memory means in which a table containing, for each level of power P, a pair of control voltages $U_1$, and $U_2$ corresponding to convergences of the lenses 12 and 14, is stored. According to a variant, the parameters of the analytical functions, allowing the control voltages $U_1$, $U_2$ to be determined on the basis of a desired level of power P, may be stored in the memory of the control device 16.

An example of an analytical calculation of the control laws will now be provided. To simplify the expression for the control laws, certain approximations will be used. In practice therefore the expressions for the control laws may be different from those explained below, the following description having the sole purpose of demonstrating the possibility, with an optical system 10 comprising two variable-focus liquid lenses 12, 14, of varying the total power P of the optical system 10 while at the same time correcting an optical aberration. Each variable-focus lens 12, 14 is considered as consisting of two juxtaposed thin lenses. Even though such an approximation does not correspond exactly to reality, it does provide a good starting point for determining the control laws. The separation between the centres of the two lenses 12, 14 is denoted by $e_1$. It is also assumed that the movable refractive interface 18 of the variable-focus lens 12 separates a liquid of refractive index $n_{1,1}$ and Abbe number $v_{1,1}$ from a second liquid of refractive index $n_{2,1}$ and Abbe number $v_{2,1}$. The radius of curvature of the refractive interface 18, which has a substantially spherical shape, is denoted by $R_1$. The movable refractive interface 20 of the variable-focus lens 14 separates a first liquid of refractive index $n_{1,2}$ and Abbe number $v_{1,2}$ from a second liquid of refractive index $n_{2,2}$ and Abbe number $v_{2,2}$. The radius of curvature of the refractive interface 20, which has an approximately spherical shape, is denoted by $R_2$.

For the lens 12, the power $p_{1,1}$ provided by the first liquid is given by the following equation:

$$p_{1,1} = \frac{-(n_{1,1}-1)}{R_1} \qquad (1)$$

The power $p_{2,1}$ provided by the second lens is given by the following equation:

$$p_{2,1} = \frac{n_{2,1} - 1}{R_1} \qquad (2)$$

The total power $P_1$ of the lens 12 is therefore given by the following equation:

$$P_1 = p_{1,1} + p_{2,1} = \frac{n_{2,1} - n_{1,1}}{R_1} \qquad (3)$$

For a light ray reaching the refractive interface 18 at a distance $h_1$ from the optical axis D, the chromatic aberration $\xi_1$ introduced by the lens 12 is represented by the following equation:

$$\xi_1 = h_1^2 \left( \frac{p_{1,1}}{v_{1,1}} + \frac{p_{2,1}}{v_{2,1}} \right) = h_1^2 \frac{P_1}{v_{eq1}} \qquad (4)$$

where $v_{eq1}$ corresponds to the equivalent Abbe number for the lens 12 and is given by the following equation:

$$v_{eq1} = \frac{(n_{2,1} - n_{1,1})v_{1,1}v_{2,1}}{v_{1,1}n_{2,1} - v_{2,1}n_{1,1} - v_{1,1} + v_{2,1}} \qquad (5)$$

Similar expressions may be obtained for the lens 14, by replacing $R_1$, $h_1$, $P_1$, $p_{1,1}$, $p_{2,1}$, $n_{1,1}$, $n_{2,1}$, $v_{1,1}$, $v_{2,1}$, $\xi_1$ and $v_{eq1}$, by $R_2$, $h_2$, $P_2$, $p_{1,2}$, $p_{2,2}$, $n_{1,2}$, $n_{2,2}$, $v_{1,2}$, $v_{2,2}$, $\xi_2$ and $v_{eq2}$, respectively.
An optical ray reaching the lens 12 at a distance $h_1$ from the optical axis D reaches the lens 14 at a distance $h_2$ given by the equation:

$$h_2 = h_1(1 - e_1 P_1) \qquad (6)$$

The total power P of the lens doublet 12, 14 is given by the following equation:

$$h_1 P = h_1 P_1 + h_2 P_2 = h_1 P_1 + h_1(1 - e_1 P_1)P_2$$
$$P = P_1 + P_2 - e_1 P_1 P_2 \qquad (7)$$

The chromatic aberration $\xi$ introduced by the lens doublet 12, 14 is given by the following equation:

$$\xi = \xi_1 + \xi_2 = h_1^2 \frac{P_1}{v_{eq1}} + h_2^2 \frac{P_2}{v_{eq2}} = h_1^2 \frac{P_1}{v_{eq1}} + (h_1(1 - e_1 P_1))^2 \frac{P_2}{v_{eq2}}$$

$$\xi = h_1^2 \left[ \frac{P_1}{v_{eq1}} + (e_1 P_1 - 1)^2 \frac{P_2}{v_{eq2}} \right] \tag{8}$$

To eliminate the chromatic aberration therefore requires making the term $\xi$ zero.

Moreover, to minimize the field curvature aberration, in the absence of astigmatism, requires minimizing an expression called the Petzval sum ($\Sigma P$), which, for the optical system shown in Figure 1 has the following expression:

$$\Sigma P = \frac{P_1}{n_{1,1} n_{2,1}} + \frac{P_2}{n_{1,2} n_{2,2}} \tag{9}$$

To correct the chromatic aberration and the field curvature aberration simultaneously requires making both the terms $\xi$ and $\Sigma P$ zero. This therefore requires solving the following equation, obtained by setting equation (9) to zero and introducing the expression $P_2$ as a function of $P_1$ thus determined in the equation (8) :

$$P_1 \cdot v_{eq2} - (1 - e_1 P_1)^2 \cdot v_{eq1} \cdot P_1 \cdot \frac{n_{1,2} n_{2,2}}{n_{1,1} n_{2,1}} = 0 \tag{10}$$

This equation has only a limited number of solutions, which means that a simultaneous correction of the field curvature aberration and the chromatic aberration can be obtained only for a limited number of ($P_1$, $P_2$) pairs, that is to say for a limited number of values of the total power P. This is not conceivable since it is desirable to be able to vary the total power P in a continuous manner.

With the optical system according to the first embodiment, only one optical aberration may be corrected at a time. To give an example the chromatic aberration correction case will now be described.

To do this the aim is therefore to make the term $\xi$ zero, that is to say to solve the following equation:

$$\frac{P_1}{v_{eq1}} + (e_1 P_1 - 1)^2 \frac{P_2}{v_{eq2}} = 0 \tag{11}$$

Equation (11) therefore gives the expression for $P_2$ as a function of $P_1$:

$$P_2 = \frac{-v_{eq2} P_1}{v_{eq1}(1 - e_1 P_1)^2} \tag{12}$$

Starting from equation (7) the following expression for the total power P is obtained:

$$P = \frac{P_1(v_{eq1} - v_{eq2} - e_1 P_1)}{v_{eq1}(1 - e_1 P_1)} \qquad (13)$$

The radius of curvature $R_1$ of the refractive interface 18 of the lens 12 is therefore given by the following equation:

$$R_1 = \frac{n_{2,1} - n_{1,1}}{P_1} \qquad (14)$$

The radius of curvature $R_2$ of the refractive interface 20 of the lens 14 is given by the following equation:

$$R_2 = \frac{n_{2,2} - n_{1,2}}{P_2} \qquad (15)$$

In Figure 2, curves 30, 31, 32 and 33 show the variation in the total power P of the optical system 10 as a function of the power $P_1$ of the lens 12 for a separation $e_1$ of 0 mm, 2 mm, 3 mm and 5 mm respectively when chromatic aberration correction is made. Curves 30 to 33 have been plotted using the above equations with parameters having the following values: $n_{1,1} = 1.63$; $n_{1,2} = 1.33$; $v_{1,1} = 25$; $v_1$, = 59; $n_{2,1} = 1.33$; $n_{2,2} = 1.55$; $v_{2,1} = 59$; and $v_{2,2} = 33$. This gives $v_{eq1} = 13.38$ and $v_{eq2} = 19.87$. It should be noted that the range of variation of the total power P increases with the separation $e_1$.

The optical system 10 may therefore be controlled as follows: the control device 16 receives a signal S representative of the desired total power P. The control device 16 then determines the pair of powers $P_1$ and $P_2$ to be used for obtaining this desired total power P, while at the same time eliminating the chromatic aberration. For each lens 12, 14, the relationship between the radius of curvature $R_1$, $R_2$ of the refractive interface 18, 20 of the lens 12, 14 and the control voltage $U_1$, $U_2$ to be applied to the lens 12, 14 in order to obtain such a radius of curvature are stored in the control device 16. The control device 16 then determines the voltages $U_1$, $U_2$ to be applied to the lenses 12 and 14 in order to obtain the desired radii of curvature $R_1$, $R_2$.

To make a correction of the field curvature aberration in the absence of astigmatism, it is necessary to make the Petzval sum (equation (9)) equal to zero, giving the following equation:

$$P_2 = -\frac{n_{1,2} n_{2,2}}{n_{1,1} n_{2,1}} P_1 \qquad (16)$$

Equation (7) gives the expression for the total power:

$$P = P_1 \left(1 - \frac{n_{1,2} n_{2,2}}{n_{1,1} n_{2,1}}(1 - e_1 P_1)\right) \qquad (17)$$

In Figure 3, curves 34, 35 and 36 show the variation of the total power P as a function of the power $P_1$ of the lens 12 for a separation $e_1$ of 0 mm, 2 mm and 8 mm respectively, when a field curvature aberration correction is made. Curves 34, 35 and 36 were obtained for the same parameter values as those used for determining the curves shown in Figure 2. It will be noted that the range of variation of the total power P increases with the separation $e_1$.

The lenses 12, 14 are controlled in an identical way to that described above.

The user may deliver a signal S representative of the desired total power P to the electrical control device 16 via a manual control. Such an embodiment could be applied for example in an zoom system, in which a user can adjust the magnification of the optical system.

However, the signal S may be delivered automatically. As an example, in the case of automatical focusing (with what is called an "autofocus" system), the optical system 10 comprises an autofocus system suitable for delivering, to the control device 16, the signal S with a value that ensures focusing on the basis of an analysis of the image formed in the image plane 24. Such an autofocus system may carry out a spectral analysis of the image formed in the image plane 24.

As another example, the optical system can comprise an auto zooming system suitable for automatically delivering the control signal S to the control device 16 with a value that ensures automatic optical zooming of a given area of interest of the image to be formed, in the field of view of an optical zoom system. The "optical zooming" is understood here and in the whole specification as the optical magnification of the image, as opposed to digital magnification. The auto zooming system could comprise means for analysing at least one part of the image and means for delivering to the control device 16 the control signal S with a value that ensures zooming on the basis of the analysis of the image.

With the optical system described above, which comprises only two variable-focus lenses 12, 14, it is not possible to simultaneously focus, modify the magnification and correct an optical aberration, nor to focus and correct two optical aberrations. To do this, three liquid lenses are needed, as will now be described. However, with the optical system described above, the control for the lenses 12, 14 may be determined so as to focus and partly correct two optical aberrations, even though a complete correction of two optical aberrations cannot be made. To do this, control corresponding to a compromise may be determined on the basis of the control laws defined for correcting each optical aberration.

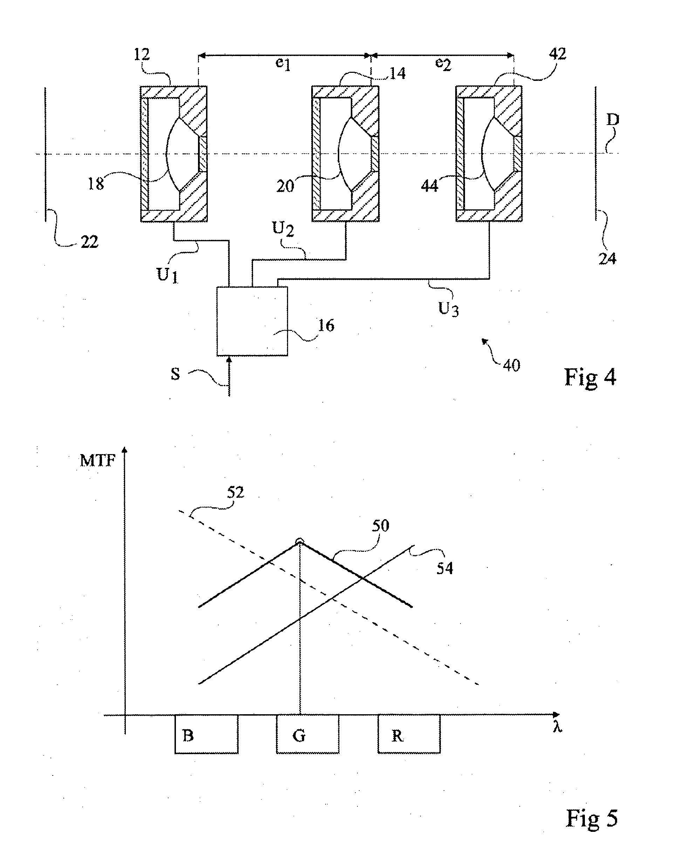

Figure 4 shows a second embodiment of an optical system 40 according to the invention. The optical system 40 comprises the set of elements of the first embodiment and further includes an additional liquid lens 42, placed for example between the lens 14 and the image plane 24. The lens 42 has a movable refractive interface 44 separating two liquids of different refractive indices and able to be deformed by applying a voltage $U_3$ between the two liquids. The voltage $U_3$ is delivered by the electrical control device 16.

With the optical system 40 based on three variable-focus lenses, the Applicant has demonstrated that the total power P of the optical system 40 may be modified within a given range and at the same time, for each value of the total power P correcting two optical aberrations, for example the chromatic aberration and the field curvature aberration. To give an example, the value of the total power P may be adjusted in order to focus, the optical system 40 therefore simultaneously carrying out the focusing operation and correcting two optical aberrations. Moreover, the Applicant has demonstrated that the total power P of the optical system 40 may be modified within a given range, so as, for each value of the total power P, to simultaneously focus and correct an optical aberration. To give an example, the value of the total power P may be adjusted in order to effect a given magnification, the optical system 40 making it possible to simultaneously focus and correct an optical aberration.

An optical ray reaching the lens 12 at a distance $h_1$ from the optical axis D reaches the lens 14 at a distance $h_2$ and the lens 42 at a distance $h_3$, the distances $h_2$ and $h_3$ being given by the following equations:

$$h_2 = h_1(1 - e_1 P_1) \tag{18}$$

$$h_3 = h_2(1 - e_2 P_2) = h_1(1 - e_1 P_1)(1 - e_2 P_2) \tag{19}$$

The total power P of the lens triplet 12, 14, 42 is given by the following equation:

$$h_1 P = h_1 P_1 + h_2 P_2 + h_3 P_3 = h_1 P_1 + h_1(1 - e_1 P_1)P_2 + h_1(1 - e_1 P_1)(1 - e_2 P_2)P_3$$
$$P = P_1 + P_2 + P_3 - e_1 P_1 P_2 - e_1 P_1 P_3 - e_2 P_2 P_3 + e_1 e_2 P_1 P_2 P_3 \tag{20}$$

The chromatic aberration $\xi$, introduced by the lens triplet 12, 14, 42 is given by the following equation:

$$\xi = \xi_1 + \xi_2 + \xi_3 = h_1^2 \frac{P_1}{v_{eq1}} + h_2^2 \frac{P_2}{v_{eq2}} + h_3^2 \frac{P_3}{v_{eq3}}$$

$$\xi = h_1^2 [\frac{P_1}{v_{eq1}} + (e_1 P_1 - 1)^2 (\frac{P_2}{v_{eq2}} + (e_2 P_2 - 1)^2 \frac{P_3}{v_{eq3}})] \qquad (21)$$

Eliminating the chromatic aberration therefore requires making the term $\xi$ equal to zero.

Moreover, to minimize the field curvature aberration in the absence of astigmatism requires minimizing the Petzval sum, which for the system shown in Figure 4 has the following expression:

$$\sum P = \frac{P_1}{n_{1,1} n_{2,1}} + \frac{P_2}{n_{1,2} n_{2,2}} + \frac{P_3}{n_{1,3} n_{2,3}} \qquad (22)$$

To correct both the chromatic aberration and the field curvature aberration requires setting equations (21) and (22) to zero.

From equation (22), the following is obtained:

$$P_3 = -n_{1,3} n_{2,3} (\frac{P_1}{n_{1,1} n_{2,1}} + \frac{P_2}{n_{1,2} n_{2,2}}) \qquad (23)$$

By introducing the expression for $p_3$ into equation (21), setting equation (21) equal to zero requires solving a third-order equation in $P_1$ and $P_2$.

From the expression for $P_3$, the total power P may be expressed as a function of $P_1$ and $P_2$. To obtain a given total power P, while at the same time correcting the chromatic aberration and the field curvature aberration it is therefore necessary to solve a system of two equations having two unknowns $P_1$ and $P_2$. It may be shown that such a system has at least one pair of solutions ($P_1$, $P_2$). $P_3$ is deduced therefrom via equation (23). The radii $R_1$ and $R_2$ of the lenses 12, 14 are given by equations (13) and (14). The radius $R_3$ is given by the equation:

$$R_3 = \frac{n_{2,3} - n_{1,3}}{P_3} \qquad (24)$$

The case in which it is desired to vary the total power P of the optical system 40 while at the same time correcting an optical aberration and focusing, will now be considered. The total power P will therefore be modified so as to vary the magnification of the image focused in the image plane 24.

Let $\alpha_3$ be the angle between a light beam exiting the lens 42 and the optical axis D and let BF be the distance between the lens 42 and the image focal plane 24. Then, for an incident ray parallel to the optical axis D and reaching the lens 12 at the distance $h_1$ from the optical axis D, there is the following equation:

$$\alpha_3 = \frac{h_3}{BF} = h_1 P_1 + h_2 P_2 + h_3 P_3 \qquad (25)$$

For focusing, the distance BF must be constant, since the image plane 24 remains fixed.

From equations (18) and (19), equation (25) becomes:

$$\frac{(1-e_1P_1)(1-e_2P_2)}{BF} = P_1 + (1-e_1P_1)P_2 + (1-e_1P_1)(1-e_2P_2)P_3 \quad (26)$$

i.e.:

$$P_3 = \frac{1}{BF} - \frac{P_1}{(1-e_1P_1)(1-e_2P_2)} - \frac{P_2}{1-e_2P_2} \quad (27)$$

If it is desired to correct the chromatic aberration, the term $\xi$ given by equation (21) must be made equal to zero. By introducing the expression for $P_3$ into equation (21), letting equation (21) be equal to zero, amounts to solving a third-order equation for $P_1$ and $P_2$. From the expression for $P_3$, the total power P may be expressed as a function of $P_1$ and $P_2$. To obtain a given total power P and to simultaneously focus and correct the chromatic aberration, it is then necessary to solve a system of two equations having two unknowns $P_1$ and $P_2$. It may be shown that such a system has at least one pair of solutions $(P_1, P_2)$. $P_3$ is derived from this via equation (27). The radii $R_1$, $R_2$ and $R_3$ of the lenses 12, 14 and 42 are given by equations (13), (14) and (24). Similar reasoning may be applied for correcting the field curvature.

Compared with the previously described embodiments, the provision of additional liquid lenses makes it possible in particular to correct additional optical aberrations. These may for example be the spherical aberration or the coma aberration.

Figure 5 illustrates one particular autofocus method for an optical system according to the embodiments described above. Such a method consists in introducing an optical aberration in a controlled manner, and this will be described in the case of chromatic aberration. To implement this method, the optical system includes means suitable for carrying out an analysis of the image obtained in the image plane 24 or at least one portion of said image. Such an analysis may be carried out by the image acquisition means of the optical system, for example a colour CCD sensor or a colour CMOS sensor. The optical system includes a processing module suitable for determining a quality function representative of the state of focus of the image as a function of the wavelength or of a wavelength band. For each wavelength or each wavelength band, such a quality function passes through an extremum at the point of focus.

In one example, the quality function corresponds to the modulation transfer function or MTF of the optical system determined from the spectral analysis of the image obtained. The modulation transfer function represents the attenuation due to the optical system for each wavelength band of the light reaching the optical system. In another example, the quality function is representative of the transition sharpness of an object image located in a given area of interest of the sensor, as a function of each wavelength band. But of course, any other quality criterion of the image can be used, such criterion being known to the man skilled in the art for the realization of an autofocus system.

The method here consists in initially setting predetermined power values for the liquid lenses of the optical system in such a way that an identifiable chromatic aberration is observed in the image provided by the optical system. Analysis of the quality function obtained in the presence of chromatic aberration then provides information about the way in which the total power of the optical system has to be modified in order to focus. This is because variation in the quality function as a function of the wavelength, or of a wavelength band, is different depending on whether chromatic aberration is present or not. By comparing the values of the quality function for various spectral bands, for example the red band (R), the green band (G) and the blue band (B), when introducing a chromatic aberration with respect to the values of the quality function that are expected in the absence of chromatic aberration, it is possible to obtain information about the way in which the total power has to be modified in order to focus and even to obtain information about the amplitude of the variation in total power to be provided.

To give an example, in Figure 5, curve 50 shows the general variation of the quality function when focusing is achieved. Curves 52 and 54, plotted with a dotted line and as a fine line respectively, show the variation of the quality function when the same chromatic aberration is present in the case in which the total power of the optical system is too low and in the case when it is too high, respectively.

In general, the present invention makes it possible, from the analysis of the image provided by the optical system, to automatically and/or continuously minimize optical aberrations.

For example, the applicant has shown that with an image-forming optical system according to the invention and including four variable-focus lenses, it is possible to achieve an optical system whose magnification can be modified within a given range (zoom system), while ensuring focusing and correcting at least partially, at least two optical aberrations.

The image-forming optical system according to the invention presents the advantage, with respect to prior art, of ensuring correction of optical aberrations while having variable-focus lenses with substantially spherical interfaces.

Of course, the present invention is capable of various alternative embodiments and modifications that will be apparent to those skilled in the art. In particular, the optical system may comprise, in addition to liquid lenses, a rigid lens or several rigid lenses. Furthermore, to reduce the size of the optical system following the mean direction of the light rays reaching the optical system, it is possible to add reflecting mirrors on either side of the liquid lenses so as to place the liquid lenses along an axis that is inclined to the mean direction of the incoming light rays. In addition, to reduce the size of the optical system, it is also possible to place two or more refractive liquids in one and the same enclosure.

## Claims

1. Image-forming optical system (10; 40), comprising:

   - at least first and second variable-focus lenses (12, 14) of the electrowetting type, the focal length of each lens being controlled by the application of a control voltage, each of said variable-focus lenses having a movable refractive interface (18, 20) that separates two liquids of different refractive indices, **characterized in that** the shape of the interface is spherical, the curvature of the interface being modified by the application of said voltage, the optical system further comprising
   - a control device (16) suitable for receiving a control signal (S) representative of a desired power (P) of the optical system and suitable for delivering, on the basis of the control signal and of a predefined control law and/or of a predefined table, at least a first control voltage ($U_1$) to the first lens and a second control voltage ($U_2$) to the second lens so that the power of the optical system obtained is equal to the desired power while simultaneously correcting, at least in part, the variations of one or more optical aberrations resulting from the modification of the curvature of each interface when a control voltage is applied.

2. Image-forming optical system according to claim 1, wherein the control device comprises memory means in which said predefined control law and/or said predefined table is stored.

3. Image-forming optical system according to Claim 1, in which the optical aberration is a chromatic aberration or the field curvature aberration.

4. Image-forming optical system according to claim 1, further comprising manual control to deliver the signal (S)representative of the desired power of the optical system.

5. Image-forming optical system according to claim 1, further comprising an autofocus system suitable for automatically delivering the control signal (S) to the control device (16) with a value that ensures focusing.

6. Image-forming optical system according to claim 5, wherein said autofocus system comprises means for analysing at least one part of the image and means for delivering to the control device (16) said control signal (S) with a value that ensures focusing on the basis of the analysis of said image.

7. Image-forming optical system according to claim 4, further comprising an auto zooming system suitable for automatically delivering the control signal (S) to the control device (16) with a value that ensures automatic optical zooming of an area of interest in the field of view of the optical system.

8. Image-forming optical system according to claim 7, wherein said auto zooming system comprises means for analysing at least one part of the image and means for delivering to the control device (16) said control signal (S) with a value that ensures optical zooming in or out on the basis of the analysis of said image.

9. Image-forming optical system according to Claim 1, comprising at least a third variable-focus lens (42) of the electrowetting type, the control device (16) being suitable for delivering, on the basis of the control signal received and of said predefined control law and/or of said predefined table, a third control voltage (U3) to the third lens so that the power of the optical system obtained is equal to the desired power while simultaneously correcting two optical aberrations, or while obtaining a given magnification of the image and simultaneously correcting one optical aberration.

10. Image-forming optical system according to claim 1, wherein it comprises four variable-focus lens of the electrowetting type, the control device (16) being suitable for delivering, on the basis of the control signal received and of said prestored control law and/or of said predefined table, a control voltage to each of said lenses so that the power of the optical system obtained is equal to the desired power while obtaining a given magnification of the image and simultaneously correcting, at least in part, two or more optical aberrations.

**11.** Method of controlling an image-forming optical system (10; 40), comprising at least first and second variable-focus lenses (12, 14) of the electrowetting type, the focal length of each lens being controlled by the application of a control voltage, each of the said variable-focus lenses having a movable refractive interface that separates two liquids of different refractive indices, **characterized in that** the curvature of the interface is modified by the application of said voltage, while the shape of the interface remains spherical, the method comprising the following steps:

- determining, on the basis of a control signal (S) representative of a desired power of the optical system, and of a predefined control law and/or a predefined table, at least a first control voltage ($U_1$) to be delivered to the first lens and a second control voltage ($U_2$) to be delivered to the second lens so that the power of the optical system obtained is equal to the desired power, while simultaneously correcting, at least in part, the variations of one or more optical aberrations resulting from the modification of the curvature of each interface when a control voltage is applied;
- applying the at least first and second control voltages to the at least first and second lenses respectively.

**12.** Method according to Claim 11, in which the optical system (40) comprising at least a third variable-focus lens (42) of the electrowetting type, the method further comprises:

- determining on the basis of the control signal (S), and of the predefined control law and/or the predefined table, at least a third control voltage ($U_3$) to be delivered to said third lens, so that the power of the optical system obtained is equal to the desired power, while simultaneously correcting two optical aberrations, or while obtaining a given magnification of the image and simultaneously correcting one optical aberration.

**13.** Method according to Claim 11, further comprising:

- analysing at least part of the image formed; and
- determining a value of said control signal (S) for optimizing a quality criterion of the image to ensure focusing.

**14.** Method according to claim 13, wherein the image-forming optical device comprising two variable-focus lenses, the control of the said lenses is determined so as to focus and partly correct at least two optical aberrations.

**15.** Method according to Claim 11, further comprising:

- applying a first and a second control voltages ($U_1$, $U_2$) to said first and second lenses (12, 14) respectively in order to obtain an image with a given optical aberration; and
- determining a value of said control signal (S) on the basis of an analysis of at least part of the image obtained with said given optical aberration making it possible to focus.

**16.** Method according to Claim 15, in which the given optical aberration is a chromatic aberration and in which the analysis of the image comprises:

- comparing the values of a quality function of the image, which reaches an extreme value when the optical system (10; 40) is focused, for a plurality of wavelengths or a plurality of wavelength bands, , in the presence of said chromatic aberration, with respect to the expected value of the quality function for said wavelengths or wavelengths bands in the absence of said chromatic aberration.

**17.** Method according to Claim 15, in which the quality function representative of focusing is the transfer modulation function of the optical system (10; 40).

**Patentansprüche**

**1.** Bildgebendes optisches System (10; 40), das umfasst:

- mindestens eine erste und eine zweite Linse (12, 14) mit variabler Brennweite vom Elektrobenetzungstyp, wobei die Brennweite jeder Linse durch das Anlegen einer Steuerspannung gesteuert wird, wobei jede der Linsen mit variabler Brennweite eine bewegliche brechende Grenzfläche (18, 20) aufweist, die zwei Flüssigkeiten mit unterschiedlichen Brechungsindizes trennt, **dadurch gekennzeichnet, dass** die Form der Grenzfläche sphärisch ist, wobei die Krümmung der Grenzfläche durch das Anlegen der Spannung geändert wird, wobei das optische System ferner umfasst:

- eine Steuervorrichtung (16), die dafür geeignet ist, ein Steuersignal (S) zu empfangen, das eine gewünschte Brechkraft (P) des optischen Systems repräsentiert, und dafür geeignet ist, auf der Grundlage des Steuersignals und eines vordefinierten Steuergesetzes und/oder einer vordefinierten Tabelle in der Weise mindestens eine erste Steuerspannung ($U_1$) an die erste Linse und eine zweite Steuerspannung ($U_2$) an die zweite Linse zu liefern, dass die erhaltene Brechkraft des optischen Systems gleich der gewünschten Brechkraft ist, während gleichzeitig die Abweichungen einer oder mehrerer optischer Aberrationen, die sich aus der Änderung der Krümmung jeder Grenzfläche, wenn eine Steuerspannung angelegt wird, ergeben, mindestens teilweise korrigiert werden.

2. Bildgebendes optisches System nach Anspruch 1, wobei die Steuervorrichtung Speichermittel umfasst, in denen das vordefinierte Steuergesetz und/oder die vordefinierte Tabelle gespeichert sind.

3. Bildgebendes optisches System nach Anspruch 1, in dem die optische Aberration eine chromatische Aberration oder die Feldkrümmungsaberration ist.

4. Bildgebendes optisches System nach Anspruch 1, das ferner eine Handsteuerung zum Liefern des Signals (S), das die gewünschte Brechkraft des optischen Systems repräsentiert, umfasst.

5. Bildgebendes optisches System nach Anspruch 1, das ferner ein Autofokussystem umfasst, das dafür geeignet ist, automatisch das Steuersignal (S) mit einem Wert, der die Fokussierung sicherstellt, an die Steuervorrichtung (16) zu liefern.

6. Bildgebendes optisches System nach Anspruch 5, wobei das Autofokussystem Mittel zum Analysieren mindestens eines Teils des Bilds und Mittel zum Liefern des Steuersignals (S) mit einem Wert, der auf der Grundlage der Analyse des Bilds die Fokussierung sicherstellt, an die Steuervorrichtung (16) zu liefern, umfasst.

7. Bildgebendes optisches System nach Anspruch 4, das ferner ein Auto-Zoom-System umfasst, das dafür geeignet ist, das Steuersignal (S) automatisch mit einem Wert, der ein automatisches optisches Zoomen auf einen interessierenden Bereich in dem Gesichtsfeld des optischen Systems sicherstellt, an die Steuervorrichtung (16) zu liefern.

8. Bildgebendes optisches System nach Anspruch 7, wobei das Auto-Zoom-System Mittel zum Analysieren mindestens eines Teils des Bilds und Mittel zum Liefern des Steuersignals (S) mit einem Wert, der auf der Grundlage der Analyse des Bilds ein optisches Einzoomen oder Auszoomen sicherstellt, an die Steuervorrichtung (16) umfasst.

9. Bildgebendes optisches System nach Anspruch 1, das mindestens eine dritte Linse (42) mit variabler Brennweite vom Elektrobenetzungstyp umfasst, wobei die Steuervorrichtung (16) dafür geeignet ist, auf der Grundlage des empfangenen Steuersignals und des vordefinierten Steuergesetzes und/oder der vordefinierten Tabelle eine dritte Steuerspannung ($U_3$) in der Weise an die dritte Linse zu liefern, dass die erhaltene Brechkraft des optischen Systems gleich der gewünschten Brechkraft ist, während gleichzeitig zwei optische Aberrationen korrigiert werden oder während eine gegebene Vergrößerung des Bilds erhalten wird und gleichzeitig eine optische Aberration korrigiert wird.

10. Bildgebendes optisches System nach Anspruch 1, wobei es vier Linsen mit variabler Brennweite vom Elektrobenetzungstyp umfasst, wobei die Steuervorrichtung (16) dafür geeignet ist, auf der Grundlage des empfangenen Steuersignals und des vorgespeicherten Steuergesetzes und/oder der vordefinierten Tabelle in der Weise eine Steuerspannung für jede der Linsen zu liefern, dass die erhaltene Brechkraft des optischen Systems gleich der gewünschten Brechkraft ist, während eine gegebene Vergrößerung des Bilds erhalten wird und während gleichzeitig zwei oder mehr optische Aberrationen mindestens teilweise korrigiert werden.

11. Verfahren zum Steuern eines bildgebenden optischen Systems (10; 40), das mindestens eine erste und eine zweite Linse (12, 14) mit variabler Brennweite vom Elektrobenetzungstyp umfasst, wobei die Brennweite jeder Linse durch das Anlegen einer Steuerspannung gesteuert wird, wobei jede der Linsen mit variabler Brennweite eine bewegliche brechende Grenzfläche aufweist, die zwei Flüssigkeiten mit unterschiedlichen Brechungsindizes trennt, **dadurch**

**gekennzeichnet, dass** die Krümmung der Grenzfläche durch das Anlegen der Spannung geändert wird, wobei die Form der Grenzfläche sphärisch bleibt, wobei das Verfahren die folgenden Schritte umfasst:

- Bestimmen mindestens einer ersten Steuerspannung ($U_1$), die an die erste Linse zu liefern ist, und einer zweiten Steuerspannung ($U_2$), die an die zweite Linse zu liefern ist, auf der Grundlage eines Steuersignals (S), das eine gewünschte Brechkraft des optischen Systems repräsentiert, und eines vordefinierten Steuergesetzes und/oder einer vordefinierten Tabelle in der Weise, dass die erhaltene Brechkraft des optischen Systems gleich der gewünschten Brechkraft ist, während gleichzeitig die Abweichungen einer oder mehrerer optischer Aberrationen, die sich aus der Änderung der Krümmung jeder Grenzfläche, wenn eine Steuerspannung angelegt wird, ergeben, mindestens teilweise korrigiert werden;
- Anlegen der ersten und/oder der zweiten Steuerspannung an die erste und/oder an die zweite Linse.

12. Verfahren nach Anspruch 11, in dem das optische System (40) mindestens eine dritte Linse (42) mit variabler Brennweite vom Elektrobenetzungstyp umfasst, wobei das Verfahren ferner umfasst:

- Bestimmen mindestens einer dritten Steuerspannung ($U_3$), die an die dritte Linse zu liefern ist, auf der Grundlage des Steuersignals (S) und des vordefinierten Steuergesetzes und/oder der vordefinierten Tabelle in der Weise, dass die erhaltene Brechkraft des optischen Systems gleich der gewünschten Brechkraft ist, während gleichzeitig zwei optische Aberrationen korrigiert werden oder während eine gegebene Vergrößerung des Bilds erhalten wird und gleichzeitig eine optische Aberration korrigiert wird.

13. Verfahren nach Anspruch 11, das ferner umfasst:

- Analysieren mindestens eines Teils des erzeugten Bilds; und
- Bestimmen eines Werts des Steuersignals (S) zum Optimieren eines Qualitätskriteriums des Bilds, um die Fokussierung sicherzustellen.

14. Verfahren nach Anspruch 13, wobei die bildgebende optische Vorrichtung zwei Linsen mit variabler Brennweite umfasst, wobei die Steuerung der Linsen in der Weise bestimmt wird, dass sie fokussiert und mindestens zwei optische Aberrationen teilweise korrigiert werden.

15. Verfahren nach Anspruch 11, das ferner umfasst:

- Anlegen einer ersten und einer zweiten Steuerspannung ($U_1$, $U_2$) an die erste bzw. an die zweite Linse (12, 14), um ein Bild mit einer gegebenen optischen Aberration zu erhalten; und
- Bestimmen eines Werts des Steuersignals (S) auf der Grundlage einer Analyse mindestens eines Teils des erhaltenen Bilds mit der gegebenen optischen Aberration in der Weise, dass das Fokussieren ermöglicht wird.

16. Verfahren nach Anspruch 15, in dem die gegebene optische Aberration eine chromatische Aberration ist und in dem die Analyse des Bilds umfasst:

- Vergleichen der Werte einer Qualitätsfunktion des Bilds, die einen Extremwert erreicht, wenn das optische System (10; 40) fokussiert ist, für mehrere Wellenlängen oder für mehrere Wellenlängenbänder in Anwesenheit der chromatischen Aberration in Bezug auf den erwarteten Wert der Qualitätsfunktion für die Wellenlängen oder Wellenlängenbänder in Anwesenheit der chromatischen Aberration.

17. Verfahren nach Anspruch 15, in dem die Qualitätsfunktion, die die Fokussierung repräsentiert, die Modulationsübertragungsfunktion des optischen Systems (10; 40) ist.

**Revendications**

1. Système optique de formation d'image (10; 40), comprenant:

- au moins des première et deuxième lentilles à focale variable (12, 14) de type à électromouillage, la distance focale de chaque lentille étant commandée par l'application d'une tension de commande, chacune desdites lentilles à focale variable ayant une interface de réfraction mobile (18 , 20) qui sépare deux liquides d'indices de réfraction différents, **caractérisé en ce que** la forme de l'interface est sphérique, la courbure de l'interface étant modifiée par l'application de ladite tension, le système optique comprenant en outre

- un dispositif de commande (16) adapté à recevoir un signal de commande (S) représentatif d'une puissance de consigne (P) du système optique et apte à fournir, sur la base du signal de commande et d'une loi de commande prédéfinie et/ou d'une table prédéfinie, au moins une première tension de commande ($U_1$) de la première lentille et une deuxième tension de commande ($U_2$) de la deuxième lentille de sorte que la puissance du système optique obtenue est égale à la puissance de consigne tout en corrigeant simultanément, au moins en partie, les variations d'une ou plusieurs aberrations optiques résultant de la modification de la courbure de chaque interface lorsqu'une tension de commande est appliquée.

2. Système optique de formation d'image selon la revendication 1, dans lequel le dispositif de commande comprend des moyens de mémoire dans lesquels ladite loi de commande prédéfinie et/ou ladite table prédéfinie est enregistrée.

3. Système optique de formation d'image selon la revendication 1, dans lequel l'aberration optique est une aberration chromatique ou l'aberration de courbure de champ.

4. Système optique de formation d'image selon la revendication 1, comprenant en outre une commande manuelle pour fournir le signal (S) représentatif de la puissance de consigne du système optique.

5. Système optique de formation d'image selon la revendication 1, comprenant en outre un système autofocus adapté à fournir automatiquement le signal de commande (S) au dispositif de commande (16) avec une valeur qui assure la focalisation.

6. Système optique de formation d'image selon la revendication 5, dans lequel ledit système autofocus comprend des moyens pour analyser au moins une partie de l'image et des moyens pour fournir au dispositif de commande (16) ledit signal de commande (S) avec une valeur qui assure la focalisation sur la base de l'analyse de ladite image.

7. Système optique de formation d'image selon la revendication 4, comprenant en outre un système de zoom automatique adapté à fournir automatiquement le signal de commande (S) au dispositif de commande (16) avec une valeur qui assure un zoom optique automatique d'une zone d'intérêt dans le champ de vision du système optique.

8. Système optique de formation d'image selon la revendication 7, dans lequel ledit système de zoom automatique comprend des moyens pour analyser au moins une partie de l'image et des moyens pour fournir au dispositif de commande (16) ledit signal de commande (S) avec une valeur qui assure un zoom optique avant ou arrière sur la base de l'analyse de ladite image.

9. Système optique de formation d'image selon la revendication 1, comprenant au moins une troisième lentille à focale variable (42) du type à électromouillage, le dispositif de commande (16) étant apte à fournir, sur la base du signal de commande reçu et de ladite loi de commande prédéfinie et/ou de ladite table prédéfinie, une troisième tension de commande ($U_3$) à la troisième lentille de sorte que la puissance du système optique obtenue est égale à la puissance de consigne tout en corrigeant simultanément deux aberrations optiques, ou tout en obtenant un grossissement donné de l'image et corrigeant simultanément une aberration optique.

10. Système optique de formation d'image selon la revendication 1, dans lequel il comprend quatre lentilles à focale variable du type à électromouillage, le dispositif de commande (16) étant apte à fournir, sur la base du signal de commande reçu et de ladite loi de commande préenregistrée et/ou de ladite table prédéfinie, une tension de commande à chacune desdites lentilles de sorte que la puissance du système optique obtenue est égale à la puissance de consigne tout en obtenant un grossissement donné de l'image et corrigeant simultanément, au moins en partie, deux ou plusieurs aberrations optiques.

11. Procédé de commande d'un système optique de formation d'image (10; 40), comprenant au moins des première et deuxième lentilles à focale variable (12, 14) de type à électromouillage, la distance focale de chaque lentille étant commandée par l'application d'une tension de commande, chacune desdites lentilles à focale variable ayant une interface de réfraction mobile qui sépare deux liquides d'indices de réfraction différents, **caractérisé en ce que** la courbure de l'interface est modifiée par l'application de ladite tension, tandis que la forme de l'interface reste sphérique, le procédé comprenant les étapes suivantes:

- la détermination, sur la base d'un signal de commande (S) représentatif d'une puissance de consigne du système optique, et d'une loi de commande prédéfinie et/ou une table prédéfinie, d'au moins une première

tension de commande (U$_1$) à être fournie à la première lentille et une deuxième tension de commande (U$_2$) à être fournie à la deuxième lentille de sorte que la puissance du système optique obtenue est égale à la puissance de consigne, tout en corrigeant simultanément, au moins en partie, les variations d'une ou plusieurs aberrations optiques résultant de la modification de la courbure de chaque interface lorsqu'une tension de commande est appliquée;
- l'application des au moins les première et deuxième tensions de commande aux au moins les première et deuxième lentilles, respectivement.

12. Procédé selon la revendication 11, dans lequel le système optique (40) comprend au moins une troisième lentille à focale variable (42) du type à électromouillage, le procédé comprenant en outre:

- la détermination, sur la base du signal de commande (S), et de la loi de commande prédéfinie et/ou la table prédéfinie, d'au moins une troisième tension de commande (U$_3$) à être fournie à ladite troisième lentille, de sorte que la puissance du système optique obtenue est égale à la puissance de consigne, tout en corrigeant simultanément deux aberrations optiques, ou tout en obtenant un grossissement donné de l'image et corrigeant simultanément une aberration optique.

13. Procédé selon la revendication 11, comprenant en outre:

- l'analyse d'au moins une partie de l'image formée; et
- la détermination d'une valeur dudit signal de commande (S) pour l'optimisation d'un critère de qualité de l'image pour assurer la focalisation.

14. Procédé selon la revendication 13, dans lequel le dispositif optique de formation d'image comprend deux lentilles à focale variable, la commande desdites lentilles étant déterminée de manière à focaliser et partiellement corriger au moins deux aberrations optiques.

15. Procédé selon la revendication 11, comprenant en outre:

- l'application de première et deuxième tensions de commande (U$_1$, U$_2$) auxdites première et deuxième lentilles (12, 14) respectivement afin d'obtenir une image avec une aberration optique donnée; et
- la détermination d'une valeur dudit signal de commande (S) sur la base d'une analyse d'au moins une partie de l'image obtenue avec ladite aberration optique donnée permettant la focalisation.

16. Procédé selon la revendication 15, dans lequel l'aberration optique donnée est une aberration chromatique et dans lequel l'analyse de l'image comprend:

- la comparaison des valeurs d'une fonction de qualité de l'image, qui atteint une valeur extrême lorsque le système optique (10; 40) est focalisé, pour une pluralité de longueurs d'ondes ou une pluralité de bandes de longueurs d'onde, en présence de ladite aberration chromatique, par rapport à la valeur attendue de la fonction de qualité pour lesdites longueurs d'onde ou bandes de longueurs d'onde en l'absence de ladite aberration chromatique.

17. Procédé selon la revendication 15, dans lequel la fonction de qualité représentative de la focalisation est la fonction de modulation de transfert du système optique (10; 40).

Fig 1

Fig 2

Fig 3

Fig 4

Fig 5

**EP 1 864 161 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 2580412
- US 6369954 B
- WO 2004077125 A
- US 2004227838 A